# EUROPÄISCHE PATENTANMELDUNG

(11) **EP 2 179 892 A1**
(43) Veröffentlichungstag der Anmeldung: **28.04.2010**
(21) Anmeldenummer: 09013340.6
(22) Anmeldetag: 22.10.2009
(51) Int. Cl.: B60R 1/00, G01C 25/00, H04N 17/00

(54) **Verfahren zum automatischen Kalibrieren einer virtuellen Kamera**

(30) Priorität: 24.10.2008 DE 102008053047
(71) Anmelder: Magna Electronics Europe GmbH & Co. KG, 63877 Sailauf (DE)
(72) Erfinder: Euler, Christian, 63808 Haibach (DE); Adameck, Markus, 63322 Rödermark (DE)
(74) Vertreter: Völger, Silke Beatrix

(57) **Zusammenfassung**

In einem Verfahren zum Erzeugen einer zeitlichen Sequenz von Bildern eines Kraftfahrzeug und des daran angrenzenden Umfelds aus einer virtuellen erhöhten zentralen Perspektive (Pᵥ) oberhalb des Kraftfahrzeugs auf einer Anzeigeeinrichtung (5) wird mit mehreren Aufnahmekameraeinrichtungen (1, 2, 3, 4) eine zeitliche Sequenz von Teilbilddatensatzen (**DR**_{1 N}) aus mehreren realen Perspektiven (P_{1.4}) aufgenommen. Dabei sind die realen Perspektiven (P_{1..4}) zu der virtuellen Perspektive (Pᵥ) unterschiedlich versetzt und/oder gekippt. Auf die Bilddaten (DR_{i,j}) aus jedem Tellbilddatensatz (**DR**ᵢ) werden in einer Berechnungseinheit (4) unterschiedlich parametrisierte Transformationen (T_{1..4}) angewendet, um eine Sequenz transformierter Teilbilddatensätze (**DT**_{1...N}) zu erhalten. Die Sequenz der transformierten Teilbilddatensätze (**DT**_{1...N}) wird zu einer Sequenz von Gesamtbilddaten (**DG**_{1...N}) eines Gesamtbildes aus der virtuellen Perspektive (Pᵥ) zusammen gefügt. Schließlich werden die Gesamtbilddaten (**DG** ₗ) aus der Sequenz der Gesamtbilddaten (**DG**_{1 N}) aufeinanderfolgend auf einer Anzeigeeinrichtung (5) als Gesamtbild (11) angezeigt. Um im langfristigen Gebrauch auftretende Lage- und/oder Ausrichtungsfehler der Aufnahmekameraeinrichtungen (1, 2, 3, 4) zu kompensieren wird vorgeschlagen, in einer Auswahleinheit aus der Sequenz der Teilbilddatensatze (**DR**_{1...N}) wiederkehrend unter Anwendung eines Auswahlkriteriums (C) ein Teilbilddatensatz (**DR**ₖ) auszuwählen und auf dessen Grundlage die Parameter die Parameter der Transformationen (**T**_{1 4}) durch ein Optimierungsverfahren unter einem Qualitätskriterium (Q) für das Gesamtbild (11) neu zu bestimmen.

## Beschreibung

Die vorliegende Erfindung betrifft ein Verfahren zum automatischen Kalibrieren einer virtuellen Kamera und eine virtuelle Kameravorrichtung, die zur Ausführung des erfindungsgemäßen Verfahrens eingerichtet ist. Insbesondere betrifft die vorliegende Erfindung eine virtuelle Kamera zum Erzeugen einer Ansicht der Umgebung eines Kraftfahrzeugs aus einer Vogelperspektive an einem Kraftfahrzeug.

Als sog. virtuelle Kamera werden Gesamtheiten aus einer realen Aufnahmekamera und einer regelmäßig elektronischen Bilddatenverarbeitungseinrichtung bezeichnet, die ein Ausgangssignal mit einem codierten Bild oder einer codierten Bildsequenz zu erzeugen, wobei die Perspektive der codierten Bilder nicht mit der Perspektive der Aufnahmekamera übereinstimmt. Wegen des Informationsverlusts bei der Abbildung eines realen dreldimensionalen Objekts durch eine reale Aufnahmekamera in ein zweidimensionales Bilddatenmodelll kann die virtuelle Kamera nicht bewegte Objekte vor allem dann korrekt wiedergeben, wenn diese annähernd flach sind.

Virtuelle Kameras wurden als Fahrerassistenzeinrichtungen In Kraftfahrzeugen vorgeschlagen. Hierbel geht es vor allem um sog. Top View Systeme oder omnidirektionale Kameras. Diese umfassen typisch mehrere im oder am Fahrzeug angeordnete reale Aufnahmekameras, mit denen eine zeitliche Sequenz von Bilddatensätzen erzeugt wird. Die Bilddaten der Bilddatensätze werden In einer typisch elektronischen Bilddatenverarbeitungseinrichtung unterschiedlichen Transformationen unterzogen und zu einer zeitlichen Sequenz von Gesamtbilddaten gemischt. Dadurch kann beispielsweise eine Ansicht der um das Fahrzeug herum liegenden Umgebung aus einer Perspektive oberhalb des Fahrzeugdachs erhalten werden. Diese zeitliche Sequenz von Gesamtbilddaten kann auf einer Anzeigevorrichtung dem Fahrer des Kraftfahrzeugs fortlaufend angezeigt werden, um Rangier- oder Parkmanöver zu erleichtern.

Es ist offensichtlich, dass bei einer virtuellen Kamera mit mehreren realen Aufnahmekameras die Qualität des gelieferten Gesamtbilds deutlich von der exakten Kenntnis der Positionen und Richtungen der realen Aufnahmekameras abhängt. Je genauer diese Daten bekannt sind, umso einfacher kann die Transformation bestimmt werden, die eine möglichst gute Bildqualität im Bereich aneinander grenzender Aufnahmebereiche liefert. Vor diesem Hintergrund hat es eine Reihe von Vorschlägen gegeben, wie entweder die automatische Bestimmung der Positionen und Richtungen der Aufnahmekameras oder die Korrektur von Fehlern in diesen Größen in Bezug auf initial gespeicherte Werte zum Gegenstand haben.

Eine onmidirektionale Kamera mit einer automatischen Kalibrierung zeigt das amtlich veröffentlichte Dokument DE 10 2007 043 905 A1. Darin wird vorgeschlagen, für die Zwecke der Kalibrierung in den Bilddaten ein Objektelement zu identifizieren. Als besonders vorteilhaft wird die Erkennung von abgebildeten Bereichen der Fahrzeugaußenhaut erkannt. Mit dem vorgeschlagenen Ansatz sollen unter anderem Lageänderungen in den realen Aufnahmekameras am Fahrzeug aufgrund von Vibrationen, Alterung und thermischen oder mechanischen Beanspruchungen kompensierbar sein.

Allerdings beruht das bekannte Verfahren auf der Verarbeitung von Informationen aus einem Modell der realen Welt und insbesondere auf der Verarbeitung von Informationen hinsichtlich der Gestalt der Fahrzeugaußenhaut.

Vor diesem Hintergrund stellt sich die vorliegende Erfindung die Aufgabe, ein Verfahren zum automatischen Kalibrieren einer virtuellen Kamera bereit zu stellen, das unabhängig von einem Modell der realen Welt auskommt.

Diese Aufgabe löst die vorliegende Erfindung durch ein Verfahren mit den in Anspruch 1 angegebenen Merkmalen.

Vorteilhafte Ausgestaltungen und Weiterbildungen des erfindungsgemäßen Verfahrens sind in den Unteransprüchen angegeben.

Eine bevorzugte Durchführungsweise des erfindungsgemäßen Verfahrens und eine dazu eingerichtete virtuelle Kameravorrichtung wird nachfolgend beschrieben, wobei auf die anhängenden Zeichnungen Bezug genommen wird. Darin zeigen:
Fig. 1 eine schematische Veranschaulichung einer typischen Anordnung von realen Aufnahmekameras an einem Kraftfahrzeug und der Lage der virtuellen Perspektive; und
Fig. 2 eine schematische Darstellung der Funktionseinheiten und Datenströme in einer bevorzugten Vorrichtung zur Durchführung eines erfindungsgemäßen Verfahrens; und
Fig. 3 eine schematische Zusammenfassung eines Algorithmus zur Umsetzung eines erfindungsgemäßen Verfahrens.

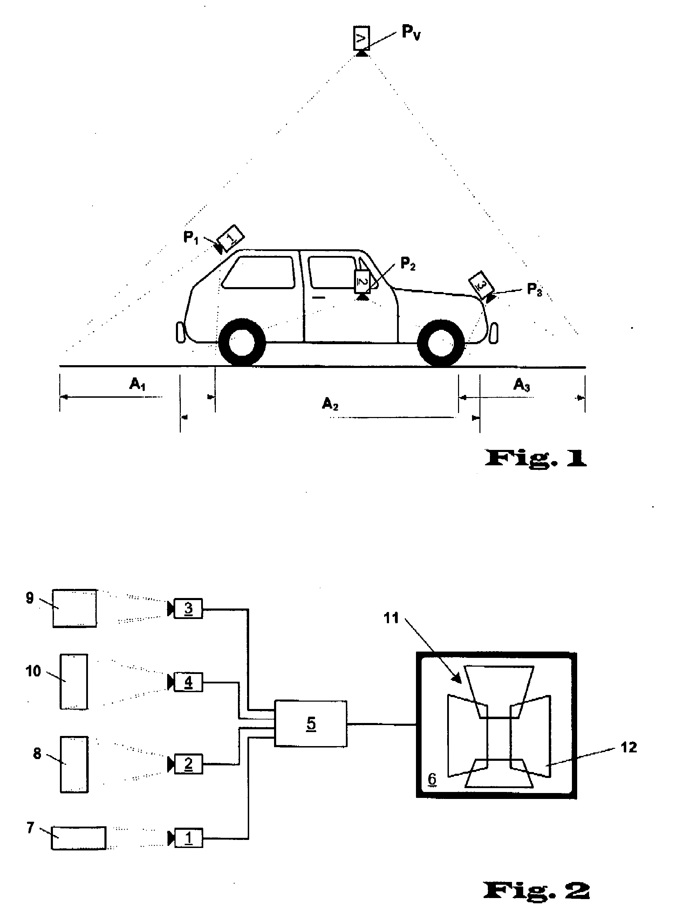

Gemäß Fig. 1 umfasst eine zweckmäßige Vorrichtung zur Durchführung eines bevorzugten erfindungsgemäßen Verfahrens für ein Fahrerassistenzsystem an einem Kraftfahrzeug zunächst mehrere reale Aufnahmekameraeinrichtungen 1, 2, 3. Eine vierte Aufnahmekameraeinrichtung 4 befindet sich im unsichtbaren Bereich auf der zur Aufnahmekameraeinrichtung 2 gegenüber liegenden Fahrzeugseite. Die realen Aufnahmekameraeinrichtungen 1, 2, 3, 4 sind in einer zweckmäßigen Realisierung als CCD oder CMOS Array mit Weitwinkel- oder Fischaugenoptik in an sich bekannter Art ausgebildet und an verschiedenen Stellen des Kraftfahrzeugs 4 hinter der Verscheibung sowie in geeigneten Taschen an den Außenspiegeln angeordnet. In den praktisch möglichen Anbringungspositionen sind die realen Perspektiven P_{1.4} der realen Aufnahmekameraeinrichtungen 1, 2, 3, 4 gegenüber der virtuellen Perspektive P_{V}, also dem Blickpunkt des virtuellen Betrachters, natürlich versetzt und oder gekippt. Je stärker die Abweichung der realen Perspektive P_{1.4} einer realen Aufnahmekameraeinrichtung 1, 2, 3, 4 von der virtuellen Perspektive Pᵥ ausfällt, umso schlechter ist die Qualität der perspektivisch transformierten Bilddaten unter realistischen Bedingungen. Hierauf wird an späterer Stelle noch eingegangen. Umgekehrt wären einige Sichtfelder von einem Betrachter mit einer Perspektive entsprechend der virtuellen Perspektive Pᵥ nicht einsehbar, weil sie hinter Teilen der Fahrzeugaußenhaut liegen. Insofern stellt die Auswahl der Kamerapositionen eine Abwägung dieser Vor- und Nachteile dar.

Als weitere Bestandteile umfasst die beschriebene Vorrichtung gemäß Fig. 2 eine Bilddatenverarbeltungseinrichtung 5 und eine Anzeigeeinrichtung 6. Die Anzeigeeinrichtung 6 ist dabei typisch im Bereich der Instrumententafel oder der Mittelkonsole angeordnet. Bei der Bilddatenverarbeitungseinrichtung 5 handelt es sich bei einer typischen Realisierung um einen Digitalensignalprozessor oder einen leistungsfähigen Mikroprozessor für allgemeine Anwendungen mit einer ausreichenden Ausstattung an Arbeitsspeicher und nicht-flüchtigem Programmspeicher.

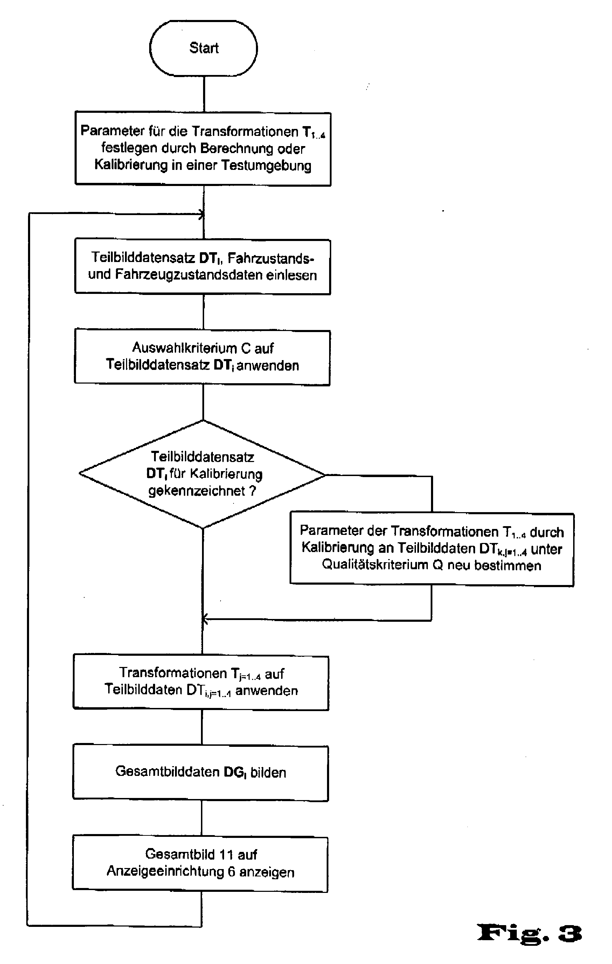

Entsprechend der schematischen Darstellung einer bevorzugten algorithmischen Umsetzung des erfindungsgemäßen Verfahrens gemäß Fig. 3 liefern die realen Aufnahmekameraeinrichtungen 1, 2, 3, 4 in dem betrachteten Betriebszeitraum jeweils eine zeitliche Sequenz von N x 4 rohen Teilbilddaten DR_{1 N,1 ,4} an die Bilddatenverarbeitungseinrichtung 5. Dort werden die Datenströme zu einer zeitlichen Sequenz von Teilbilddatensätzen **DR**_{1...N} zusammen gefasst. Jeder Teilbilddatensatz **DR**₁ der Sequenz enthält die Teilbilddaten DR_{I,1..4} aus den realen Aufnahmekameraeinrichtungen 1, 2, 3, 4. In der Bilddatenverarbeitungseinrichtung 5 wird bei Vorliegen eines Teilbilddatensatzes **DR**ᵢ auf die darin enthaltenen Teilbilddaten DR_{i,1} 4 jeweils eine Transformation T_{1 4} angewendet. Diese Transformationen T_{1..1} sind jeweils so bestimmt, dass das betreffende Bild 7, 8, 9, 10 eines vorbestimmten ebenen Abbildungsbereichs Aⱼ der realen Aufnahmekameraeinrichtung j mit der Perspektive Pᵢ in das Bild der virtuellen Kamera mit der Perspektive Pᵥ transformiert wird. Für den Fall einer idealen Aufnahmekameraeinrichtung wäre diese Transformation linear und ließe sich aus einer ebenen perspektivischen Streckung des Bildes mit einer Drehung und einer Verschiebung zusammensetzen. Die realen Aufnahmekameraeinrichtungen 1, 2, 3, 4 liefern im Vergleich zu der erwähnten idealen Aufnahmekameraeinrichtung jedoch nichtlinear verzerrte Abbildungen Überwiegend haben diese nichtlinearen Verzerrungen ihre Ursache in Unzulänglichkeiten der realen Abbildungsoptiken. Dies betrifft besonders ausgeprägt die vorgeschlagenen Optiken mit starker Weitwinkel- oder Fischaugencharakteristik. Unter diesem Gesichtspunkt sind weiter von der Fahrbahn entfernte Positionen für die realen Aufnahmekameraeinrichtungen 1, 2, 3, 4 natürlich zu bevorzugen. Jedoch können die nichtlinearen Verzerrungen zumeist mit an sich bekannten sog. inversen nichtlinearen Transformationen auf ein für die Umfeldbeobachtung zufrieden stellendes Maß zurück geführt werden Folglich wird der Fachmann entsprechend der jeweiligen Situation eine Verkettung aus einer nichtlinearen Transformation zur Entzerrung und einer idealen perspektivischen Streckung für die beschriebene Transformation T_{1..4} auswählen. Die Anwendung der Transformationen T_{1.4} auf die Teilbilddaten DR_{i,1..1} führt zu transformierten Teilbilddaten DT_{i,1..4}.. Vorliegend wird davon ausgegangen, dass die Transformationen T_{1..4} die Teilbilddaten DT_{i,1..4} unmittelbar in das Koordinatensystem des Gesamtbilds 11 transformieren. Dementsprechend können die Gesamtbilddaten DGᵢ für durch einfaches datenmäßiges Zusammenführen der transformierten Teilbilddaten DT_{i,1..4} erzeugt werden.

Da sich im beschriebenen Idealfall die Positionen und Aufnahmerlchtungen der Aufnahmekameraeinrichtungen 1, 2, 3, 4 nicht änderten, müsste die Information über die Ausrichtung und Lage der Teilbilder in dem Gesamtbild vor Inbetriebnahme nur einmal für die betreffende Fahrzeuggeometrie als Parameter für die Transformationen T_{1..4} eingestellt werden. Bei einer solchen initialen Kalibrierung können die Parameter wahlweise durch Berechnung oder Kalibrierung der Vorrichtung auf einem Prüfstand bestimmt werden. Auch bei optimaler initialer Kalibrierung können wegen der beschriebenen nichtlinearen Verzerrungen der realen Aufnahmekameraeinrichtungen 1, 2, 3, 4 im Bereich der Überlappungen 12 der Teilbilder 7, 8, 9, 10 Mehrdeutlgkeiten auftreten. Durch geeignete Auswahl der Transformationen und/oder zweckmäßige Festlegung der Teilbildgrenzen können in der Praxis allerdings durchweg zufrieden stellende Ergebnisse erzielt werden. Insofern erzeugt eine angemessen justierte Bilddatenverarbeitungseinrichtung 5 als Ausgangssignal eine Sequenz von Gesamtbilddaten **DG**_{1...N}, die auf einer Anzeigeeinrichtung 6 in ihrer zeitlichen Abfolge angezeigt werden und dem Fahrer einen Eindruck von der unmittelbaren Umgebung des Kraftfahrzeugs vermitteln.

Durch Alterungseffekte, Überiastungen, Unfälle und dergleichen kann es zu einer Änderung der Position und/oder Ausrichtung der Aufriahmekameraelnrichtungen 1, 2, 3, 4 kommen. Falls nach einer solchen Änderung die Teilbilder weiterhin in der ursprünglich festgelegten Weise zu einem Gesamtbild zusammengefügt werden, ergibt sich eine schlechtere Qualität des Gesamtbilds. Um diesem Nachteil entgegen zu wirken, führt die Bilddatenverarbeitungseinrichtung 5 wiederkehrend eine Kalibrierung durch mit dem Ziel der Optimierung unter einem vorgegebenen Qualitätskriterium Q für das Gesamtbild. Das Qualitätskriterium Q stellt dabei einen skalaren Wert dar, der von den Daten der Teilbilder und den hinterlegten Informationen zu den Positionen und Richtungen der realen Aufnahmekameraeinrichtung 1,2, 3, 4 abhängt. Zweckmäßig wird das Qualitätskriterium Q so festgelegt, dass es die subjektiv von einem durchschnittlichen Betrachter wahrgenommene Qualität des Gesamtbilds wiedergibt. Das Qualitätskriterium Q wird in einer vorteilhaften Ausgestaltung auch auf die Korrelationen der Teilbilder 7, 8, 9, 10 In den Überlappungsbereichen 12 einbeziehen. Die Optimierung des Qualitätskriteriums Q erfolgt für einen fest vorgegebenen Teilbilddatensatz **DR**ᵢ durch Variation der Parameter der Transformationen. Die auf das Optimum variierten Parameter treten für den weiteren Betrieb der Vorrichtung an die Stelle der ursprünglich darin hinteriegten Werte.

Diese Kalibrierung wird zeitlich wiederkehrend immer dann durchgeführt, wenn ein Auswahlkriterium C einen Teilbilddatensatz **DRₖ** dafür kennzeichnet. Das Auswahlkriterium C ist vorliegend so definiert, dass mit dem gekennzeichneten Teilbilddatensatz **DRₖ** die Kalibrierung ein möglichst gutes Ergebnis liefert. Intuitiv wird man von einem guten Ergebnis ausgehen, wenn die Anwendung des Qualitatskriteriums Q auf die der Kalibrierung folgenden Gesamtbilder 11 ein insgesamt möglichst gutes Ergebnis liefert. Da sich das Qualitätskriterium Q vorliegend lediglich auf einen einzelnen Bilddatensatz bezieht, bedarf die Qualität einer Sequenz natürlich einer angemessenen Definition. Hierzu können die allgemein bekannten statistischen Funktionen, wie z.B. der Mittelwert, heran gezogen werden. Das Auswahlkriterium C verarbeitet zweckmäßig jedenfalls die Teilbilddaten **DR**_{k,1..4}, um die Eignung des gekennzeichneten Teilbüddatensatzes **DR**ₖ für die Kalibrierung zu bewerten. Dies folgt der Erkenntnis, dass nicht alle Teilbilddatensätze **DRᵢ** in der Praxis gleichermaßen gut für die Kalibrierung geeignet sind. Beispielsweise muss offensichtlich eine Kalibrierung bei fehlendem Kontrast, Unterbelichtung, Defokussierung oder Bewegungsunschärfe unterbleiben. Gleichermaßen nachteilig sind Bilddatensätze mit periodischen Strukturen, die sich beispielsweise über eine Frequenzanalyse der Teilbilddaten DR_{k,1..4} erkennen lassen. Außerdem können die Teilbilddaten DR_{k,1..4} daraufhin untersucht werden, ob darin Abbildungen von dreidimensionalen Objekten oberhalb der Fahrbahnebene enthalten sind. Typische Objekte dieser Art sind beispielsweise hohe Randsteine, Leitplanken, Leitpfosten. Ein Teilbilddatensatz **DR**_{I} mit Abbildungen solcher Objekte im Bereich der Überlappungen 12 sollte nicht für die Kalibrierung verwendet werden.

Ferner kennzeichnet das Auswahlkriterium C einen Teilbilddatensatz **DRₖ** nur dann für die Kalibrierung, wenn im Zeitpunkt von dessen Aufnahme ein bestimmter Zustand des Kraftfahrzeugs vorlag und die Fahrsituation in diesem Moment vorgegebene Grenzen einhielt. Dazu werden in der Bilddatenverarbeitungseinrichtung 5 auch Fahrzeugzustandsgrößen und Fahrzustandsgrößen aus Erfassungseinrichtungen am Kraftfahrzeug abgeleitet, gesammelt und bewertet. Bevorzugte Fahrzeugzustandsgrößen sind dabei die Betriebsdauer und Laufleistung des Fahrzeugs, die Anzahl der Fahrzeugstarts und die Betriebsdauer sowie die Laufleistung seit dem letzten Start des Fahrzeugs. Durch Einbeziehung dieser Größen in das Auswahlkriterium C können vor allem thermische Änderungen, mechanische Setz- oder Alterungseffekte und Verschleiß berücksichtigt werden. Bevorzugte Fahrzustandsgrößen ausgewählt sind die Fahrgeschwindigkeit, die Beschleunigung, der Lenkwinkel, der Neigungswinkel und die Beladung des Fahrzeugs. Bei Verfügbarkeit können auch Daten über den Reifendruck und die Einsteilung der Federung einbezogen werden.

Mit der Einbeziehung dieser Daten können die dynamischen Abweichungen der Fahrzeuglage in Bezug auf die Fahrbahnoberfläche bei der Entscheidung über eine Kalibrierung berücksichtigt werden.

Weitere bevorzugte Größen zur Einbeziehung in das Auswahlkriterium C könnten die GPS-Position des Fahrzeugs, die Außenlichtverhältnisse und Signale aus Annäherungssensoren für das Nahfeld des Fahrzeugs sein. Mit der Einbeziehung solcher Größen kann für die Entscheidung über eine Kalibrierung berücksichtigt werden, ob und inwieweit die aktuelle Fahrzeugumgebung die Kalibrierung begünstigt oder erschwert.

Auf der Grundlage eines von dem Auswahlkriterium C gekennzeichneten Teilbilddatensatzes **DRₖ** kann die Kallbrierung vorzugsweise durch Berechnung einer Korrelation zwischen den Teilbilddaten **DT_{i,1..4}** in an sich bekannter Weise durchgeführt werden. Dabei werden die Überiappungsbereiche 12 identifiziert und die Lage und Ausrichtung der in den Teilbilddaten **DT_{i,1..4}** kodierten Bildausschnitte zueinander bestimmt. Das Qualitätskriterium Q wird für den gekennzeichneten Teilbilddatensatz **DRₖ** durch Variation der Parameter der Transformationen **T_{1..4}** zu einem Optimum geführt.

In einer Ausgestaltung des vorstehend beschriebenen Verfahrens kann auch die Historie der in der Vergangenheit durchgeführten Kalibrierungen in das Auswahlkriterium einbezogen werden. Diese Historie kann beispielsweise dazu verwendet werden, den Zeitpunkt für die nächste Kalibrierung zu bestimmen. Ferner ist es möglich, die Parameter der Transformationen nicht ausschließlich nach dem Ergebnis der letzen Kalibrierung zu bestimmen, sondern eine historische Mittelung vorzunehmen. Eine noch weitere Möglichkeit ist die Vorwegnahme einer Anpassung der Parameter ohne Kalibrierung durch Extrapolation auf der Grundlage der bereits gesammelten historischen Daten aus zurück liegenden Kalibrierungen.

## Patentansprüche

1. Verfahren zum Erzeugen einer zeitliche Sequenz von Bildern eines Kraftfahrzeug und des daran angrenzenden Umfelds aus einer virtuellen erhöhten zentralen Perspektive (P_{V}) oberhalb des Kraftfahrzeugs auf einer Anzeigeeinrichtung (5), worin
a. mit mehreren realen Aufnahmekameraeinrichtungen (1, 2, 3, 4) eine zeitliche Sequenz von Teilbilddatensätzen (**DR**_{1..N}) mit kodierten Teilbildern (7, 8, 9, 10) aus mehreren realen Perspektiven (P_{1..4}), die zu der virtuellen Perspektive (P_{V}) unterschiedlich versetzt und/oder gekippt sind, aufgenommen wird,
b. auf die Bilddaten (DR_{i,1..4}) aus jedem Teilbilddatensatz (**DRᵢ**) in einer Bilddatenverarbeitungseinrichtung (5) unterschiedlich parametrisierte Transformationen (T_{1..4}) angewendet werden, um eine Sequenz transformierter Teilbilddatensätze (**DT**_{1...N}) zu erhalten,
c. die Sequenz der transformierten Teilbilddatensätze (**DT**_{1...N}) zu einer Sequenz von Gesamthilddaten (**DG**₁ ._{N}) eines Gesamtbildes (11) aus der virtuellen Perspektive (Pᵥ) zusammen gefügt wird und
d. die Gesamtbilddaten (DG _{I}) aus der Sequenz der Gesamtbilddaten (**DG**_{i..N}) auf einer Anzeigeeinrichtung (6) aufeinanderfolgend angezeigt werden,
e. **dadurch gekennzeichnet, dass** in einer Auswahleinheit (6) aus der Sequenz der Teilbilddatensätze (**DR**_{1...N}) wiederkehrend unter Anwendung eines Auswahlkriteriums (C) ein Teilbilddatensatz (DRₖ) ausgewählt wird, für den die Parameter der Transformationen (T_{1..4}) durch ein Optimierungsverfahren unter einem Qualitätkriterium (Q) für das Gesamtbild neu bestimmt werden.

2. Verfahren nach Anspruch 1, wobei das Auswahlkriterium (C) durch Verarbeitung von Informationen über den Zustand und die Fahrsituation des Kraftfahrzeugs bestimmt wird, insbesondere durch die Verarbeitung von Fahrzeugzustandsgrößen und Fahrzustandsgrößen aus Erfassungseinrichtungen am Kraftfahrzeug.

3. Verfahren nach Anspruch 2, worin die von dem Auswahlkriterium (C) erfasste Anzahl von Fahrzeugzustandsgrößen ausgewählt ist aus der Laufleistung des Fahrzeugs, der Anzahl der Fahrzeugstarts und der Laufdauer des Fahrzeugs.

4. Verfahren nach Anspruch 2, worin die von dem Auswahlkriterium (C) erfasste Anzahl von Fahrzustandsgrößen ausgewählt ist aus der Fahrgeschwindigkeit, der Beschleunigung, dem Lenkwinkel, der GPS-Position, den Außenlichtverhältnissen, dem Neigungswinkel und der Beladung.

5. Verfahren nach einem der vorangehenden Ansprüche, worin das Auswahlkriterium (C) durch Verarbeitung von Informationen aus der Sequenz der Teilbilddatensätze (**DR**_{1.k}) bestimmt wird.

6. Verfahren nach Anspruch 5, wobei aus der Sequenz der Teilbilddaten (**DR**_{1 k}) jeweils Fixpunkte (F1_{1 4}) zur Bestimmung der realen Position und/oder Perspektive (P_{1..4}) der jeweiligen realen Kamera (1, 2, 3, 4) extrahiert werden.

7. Verfahren nach Anspruch 5 und 6, wobei in der Berechnungseinheit (4) aus den Teilbilddaten (DR_{k, I}) strukturelle Merkmale und insbesondere periodische Strukturen extrahiert werden.

8. Verfahren nach Anspruch 7, worin durch das Auswahlkriterium (C) die Verwendung eines von Teilbilddatensätzen **(DRₖ)** mit periodischen Strukturen für die Neuberechnung der Parameter der Transformationen (T_{1..4}) unterdrückt wird.

9. Verfahren nach einem der Ansprüche 5 bis 8, worin durch das Auswahlkriterium (C) Teilbilddatensätze **(DRₖ)** aus der Aufnahme flacher Objekte und insbesondere der Fahrbahnoberfläche bevorzugt werden.

10. Verfahren nach einem der vorangehenden Ansprüche, worin das Auswahlkriterium (C) auf die Historie der in vorausgehenden Schritten bestimmten Parameter für die Zwecke einer Plausibilisierung Bezug nimmt, insbesondere durch Anwendung einer statistischen Methode.

11. Verfahren nach einem der vorangehenden Ansprüche, worin das Qualitätskriterium (Q) für das Gesamtbild (11) die Berechnung einer Korrelation der Teilbilddaten (DR_{k,i}) aus einem Teilbilddatensatz **(DRₖ)** im Bereich eines möglichen Überlappungsbereichs (12) einbezieht.
